# DEMANDE DE BREVET EUROPEEN

(11) **EP 4 745 821 A1**
(43) Date de publication de la demande: **20.05.2026**
(21) Numéro de dépôt: 25214105.6
(22) Date de dépôt: 06.11.2025
(51) Int. Cl.: G06F 21/75

(54) **DISPOSITIF ELECTRONIQUE**

(30) Priorité: 19.11.2024 FR 2412655
(71) Demandeur: STMicroelectronics International N.V., 1228 Plan-les-Ouates, Geneva (CH)
(72) Inventeur: SARAFIANOS, Alexandre, 83910 Pourrieres (FR); LISART, Mathieu, 13100 Aix en Provence (FR); EL ALAMI, Hafsa, 13090 Aix en Provence (FR)
(74) Mandataire: Cabinet Beaumont

(57) **Abrégé**

La présente description concerne un dispositif électronique (30) comprenant :
une porte logique (31) relié à un premier noeud (18) d'application d'une tension de référence ;
un générateur de tension aléatoire (100), configuré pour générer une tension aléatoire (VRAND) sur un deuxième noeud (34) ;
une première diode (32), la cathode de la première diode (32) étant reliée au premier noeud (18) et l'anode de la première diode (32) étant reliée au deuxième noeud (34).

## Description

### Domaine technique

La présente description concerne de façon générale un dispositif électronique et plus particulièrement un dispositif électronique protégé contre des attaques de balayage laser.

### Technique antérieure

Il existe de nombreuses techniques de piratage permettant à des individus d'obtenir des informations contenues dans une puce. Par exemple, lesdits individus peuvent chercher à déterminer les informations binaires contenues dans les circuits logiques de la puce électronique. Une des techniques de piratage est le balayage laser.

### Résumé de l'invention

Il existe un besoin de protéger les puces contre le balayage laser.

Un mode de réalisation pallie tout ou partie des inconvénients des dispositifs électroniques connus.

Un mode de réalisation prévoit un dispositif électronique comprenant : une porte logique relié à un premier noeud d'application d'une tension de référence ; un générateur de tension aléatoire, configuré pour générer une tension aléatoire sur un deuxième noeud ; une première diode, la cathode de la première diode étant reliée au premier noeud et l'anode de la première diode étant reliée au deuxième noeud.

Un autre mode de réalisation prévoit un procédé d'utilisation d'un dispositif électronique comprenant : une porte logique relié à un premier noeud d'application d'une tension de référence ; un générateur de tension aléatoire ; une première diode, la cathode de la première diode étant reliée au premier noeud et l'anode de la première diode étant reliée au deuxième noeud, dans lequel une tension aléatoire est générée sur un deuxième noeud.

Selon un mode de réalisation, la porte logique est un circuit compris parmi : l'inverseur, le et logique, la négation du et logique, le ou inclusif, la négation du ou inclusif, le ou exclusif, la négation du ou exclusif.

Selon un mode de réalisation, le dispositif comprend une première région comprenant une pluralité de portes logiques et une pluralité de premières diodes.

Selon un mode de réalisation, la densité de premières diodes est supérieure à 5 par mm² dans la première région.

Selon un mode de réalisation, au moins deux premières diodes ont des dimensions différentes.

Selon un mode de réalisation, au moins deux premières diodes ont des structures différentes.

Selon un mode de réalisation, au moins une première diode comprend une jonction PN formée entre un caisson d'un premier type de conductivité et le substrat du dispositif d'un deuxième type de conductivité, opposé au premier type de conductivité.

Selon un mode de réalisation, au moins une première diode comprend une jonction PN formée entre un premier caisson d'un premier type de conductivité et un deuxième caisson d'un deuxième type de conductivité, opposé au premier type de conductivité, le deuxième caisson étant situé dans le premier caisson.

Selon un mode de réalisation, le générateur de tension aléatoire est configuré pour générer au moins deux tensions aléatoires distinctes, chacune des tensions aléatoires étant appliqué à l'anode d'au moins une première diode.

Selon un mode de réalisation, le générateur de tension aléatoire comprend : une entrée reliée à un noeud d'application d'un signal d'horloge ; au moins un module configuré pour recevoir en entrée un nombre aléatoire et pour modifier le signal d'horloge en fonction du nombre aléatoire.

Selon un mode de réalisation, le générateur comprend un module configuré pour modifier l'amplitude du signal d'horloge en fonction d'un nombre aléatoire.

Selon un mode de réalisation, le générateur comprend un module configuré pour diviser la fréquence du signal d'horloge.

Selon un mode de réalisation, le générateur de tension aléatoire comprend au moins un module d'aiguillage aléatoire.

Selon un mode de réalisation, le générateur comprend un module configuré pour ajouter un retard au signal d'horloge.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A, la figure 1B et la figure 1C illustrent le principe du balayage laser ;
la figure 2 illustre un mode de réalisation d'un dispositif électronique protégé contre le balayage laser ;
la figure 3 représente schématiquement un mode de réalisation d'un dispositif protégé contre le balayage laser ;
la figure 4 représente schématiquement un mode de réalisation d'un dispositif protégé contre le balayage laser ;
la figure 5 représente schématiquement et en vue de dessus un mode de réalisation d'un dispositif protégé contre le balayage laser ;
la figure 6 représente un mode de réalisation d'un dispositif électronique comprenant un générateur de tensions aléatoires ; et
la figure 7 illustre le fonctionnement du générateur de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

De plus, les modes de réalisation décrits ci-après sont particulièrement adaptés pour être utilisés dans tout type de marchés industriels où un circuit logique, de préférence sécurisé, est nécessaire. Plus particulièrement, un tel circuit logique peut être destiné à :
- l'industrie automobile, par exemple dans le domaine de l'électrification automobile ou dans le domaine des systèmes avancés d'aide à la conduite (Advanced Driver Assistance Systems - ADAS) ;
- l'industrie industrielle, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

L'expression "porte logique" est utilisée pour désigner un circuit électronique réalisant des opérations logiques (booléennes) sur une séquence de bits. Cette séquence est donnée par un signal d'entrée modulé en créneau (signal carré), et cadencé de façon précise par un circuit d'horloge, ou quartz. Parmi les portes logiques, on comprend l'inverseur, le "et" logique, la négation du "et" logique, le "ou inclusif", la négation du "ou inclusif", le "ou exclusif", la négation du "ou exclusif".

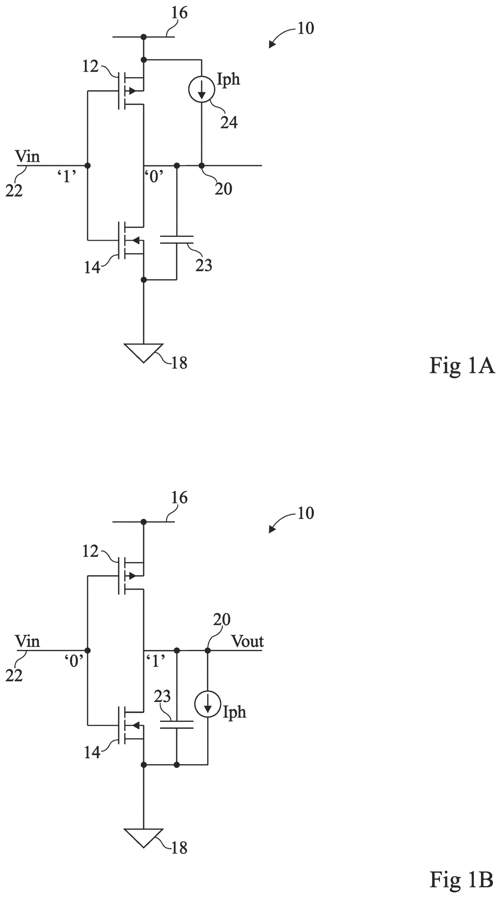

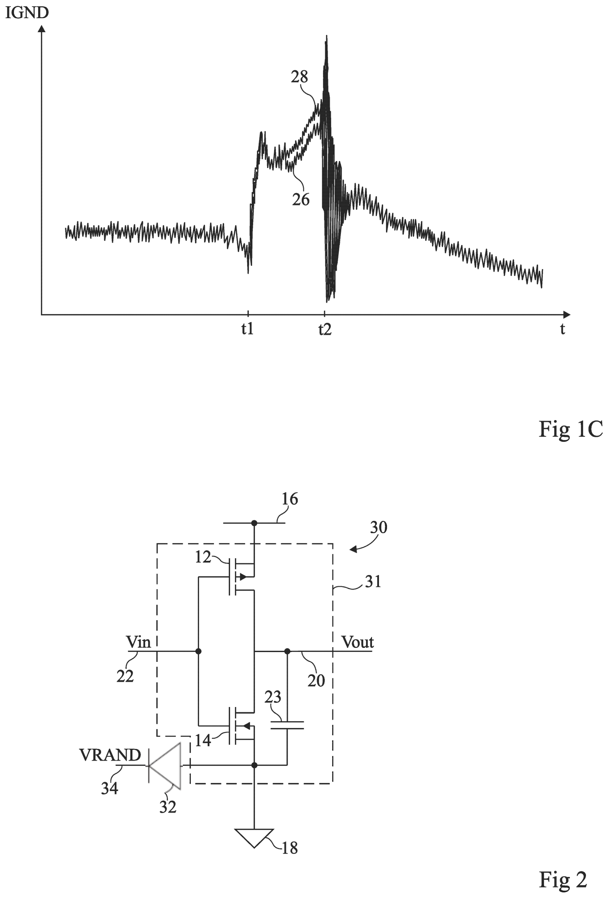

La figure 1A, la figure 1B et la figure 1C illustrent le principe du balayage laser. Plus précisément, la figure 1A représente un circuit logique, dans un premier état, sur lequel est effectué un balayage laser. La figure 1B représente le même circuit logique, dans un deuxième état, sur lequel est effectué un balayage laser. La figure 1C représente un courant de référence IGND du circuit logique dans les circuits des figures 1A et 1B.

Les figures 1A et 1B représentent un circuit inverseur 10. Le circuit 10 comprend deux transistors 12 et 14. Les transistors 12 et 14 sont par exemple des transistors de type CMOS. Le transistor 12 est par exemple un transistor de type PMOS. Le transistor 14 est par exemple un transistor de type NMOS. Les transistors 12 et 14 sont reliés en série entre un noeud 16 d'application d'une tension d'alimentation et un noeud 18 de référence, par exemple la masse. Plus précisément, la source du transistor 12 est par exemple reliée, de préférence connectée, au noeud 16 et le drain du transistor 12 est par exemple relié, de préférence connecté, à un noeud de sortie 20, sur lequel est généré une tension de sortie Vout. La source du transistor 14 est de préférence reliée, de préférence connectée, au noeud 18 et le drain du transistor 14 est par exemple relié, de préférence connecté, au noeud de sortie 20. Les noeuds de commande des transistors 12 et 14 sont reliés, de préférence connectés, entre eux et à un noeud d'entrée 22 sur lequel est appliquée une tension d'entrée Vin. Le circuit 10, comprend en outre un condensateur 23 relié entre les noeuds 20 et 18.

En figure 1A, le circuit 10 reçoit en entrée la valeur binaire '1' et fournit en sortie la valeur binaire '0' en sortie. En figure 1B, le circuit 10 reçoit en entrée la valeur binaire '0' et fournit en sortie la valeur binaire '1' en sortie.

Lors d'un balayage laser, un rayon laser est dirigé de manière à atteindre le circuit 10, par exemple le drain du transistor 14. L'application du laser induit la génération de paires électrons-trous au niveau du noeud 20, et donc la génération d'un courant Iph dans le circuit 10. Le courant Iph est représenté en figures 1A et 1B par une source de courant positif 24. L'emplacement du courant Iph, c'est-à-dire l'emplacement de la source 24, dépend de l'état du circuit logique.

Dans le cas de la figure 1A, c'est-à-dire dans le cas où la sortie du circuit 10 correspond à une valeur binaire '0', le transistor 14 est passant et le transistor 12 est bloqué. Ainsi, la source 24 représentant le courant Iph est située entre le noeud 16 et le noeud 20.

Dans le cas de la figure 1B, c'est-à-dire dans le cas où la sortie du circuit 10 fournit un signal correspondant à une valeur binaire '1', le transistor 14 est bloqué et le transistor 12 est passant. Ainsi, la source 24 représentant le courant Iph est situé entre le noeud 18 et le noeud 20.

La figure 1C représente le courant de référence IGND, c'est-à-dire le courant traversant le noeud 18, c'est-à-dire le courant total vu sur la masse, en fonction du temps. La figure 1C comprend une courbe 26 correspondant au courant IGND dans le cas du circuit 10 de la figure 1A et une courbe 28 correspondant au courant IGND dans le cas du circuit 10 de la figure 1B.

Entre des instants t1 et t2, un rayon laser est appliqué sur le noeud 20, par exemple sur le drain du transistor 14. On peut ainsi observer en figure 1C l'impact de l'état du circuit 10 sur le courant IGND. Plus précisément, le courant IGND correspondant à la courbe 26 est inférieur, entre les instants t1 et t2, au courant IGND correspondant à la courbe 28. Cette différence est causée par le courant Iph, qui traverse le noeud 18 dans le cas de la figure 1B et pas dans le cas de la figure 1A.

La différence significative entre les courbes 26 et 28 permet, en mesurant le courant IGND et en appliquant le rayon laser sur le circuit 10, de déterminer l'état du circuit 10.

La figure 2 illustre un mode de réalisation d'un dispositif électronique protégé contre le balayage laser. Plus précisément, la figure 2 représente un circuit 30 adapté pour être protégé contre les attaques de balayage laser.

Le circuit 30 comprend une porte logique 31. La porte logique comprend une entrée sur laquelle est appliquée une tension Vin, correspondant à une valeur binaire. La porte logique 31 comprend une sortie sur laquelle est appliquée une tension de sortie Vout, correspondant à une valeur binaire.

La porte logique 31 comprend un noeud relié, de préférence connecté, au noeud 16 d'application de la tension d'alimentation. La porte logique 31 comprend en outre un noeud relié, de préférence connecté, au noeud 18 d'application de la tension de référence, par exemple la masse.

Dans l'exemple de la figure 2, la porte logique est un inverseur. Le circuit 30 comprend ainsi les éléments du circuit 10 décrit précédemment. La porte logique 31 comprend ainsi les transistors 12 et 14 et le condensateur 23 agencés et reliés comme décrit en relation avec les figures 1A et 1B.

Le circuit 30 comprend en outre une diode 32 reliée entre un noeud 34 et le noeud 18. Plus précisément, la cathode de la diode 32 est reliée, de préférence connectée, au noeud 34 et l'anode de la diode 32 est reliée, de préférence connectée, au noeud 18.

Le noeud 34 est un noeud d'application d'une tension aléatoire VRAND, c'est-à-dire une tension dont la valeur et les variations sont aléatoires. La tension VRAND est ainsi indépendante de la tension Vout, de la tension Vin et de la tension d'alimentation. La tension VRAND n'est pas une tension constante. La tension VRAND est par exemple une tension périodique dont l'amplitude et la période sont changées de manière aléatoire.

L'application du rayon laser sur le circuit entraine la formation d'un courant à travers la diode 32. Ledit courant a ainsi une valeur constante, de préférence nulle, en l'absence de rayon laser, et une valeur variable, dépendant de la tension VRAND, lors de l'application du rayon laser.

Le courant aléatoire traversant la diode 32 vient s'ajouter au courant de référence illustré en figure 1C. L'ajout d'une portion aléatoire au courant de référence permet d'assurer qu'il n'est plus possible de repérer une différence significative entre le courant de référence dans le cas où la sortie du circuit 10 est dans un premier état binaire et le courant de référence dans le cas où la sortie du circuit 10 est dans un deuxième état binaire.

La diode est de préférence dédiée à la protection contre le balayage laser. Ainsi, la cathode de la diode 32 ne reçoit pas d'autre tension que la tension VRAND.

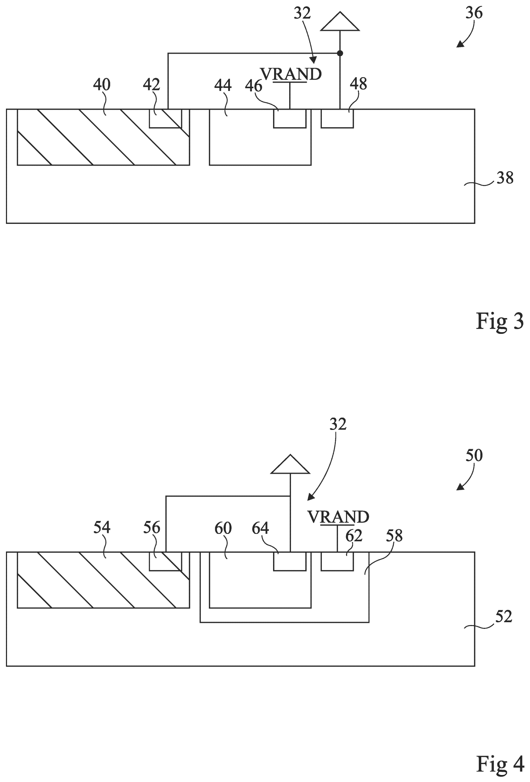

La figure 3 représente schématiquement un mode de réalisation d'un dispositif protégé contre le balayage laser. Plus précisément, la figure 3 représente schématiquement un mode d'implémentation de la diode 32 de la figure 2.

La figure 3 représente un dispositif électronique 36. Le dispositif 36 est par exemple une puce électronique. Le dispositif 36 comprend un substrat semiconducteur 38 d'un premier type de conductivité. Le substrat 38 est par exemple un substrat dopé P.

Le dispositif 36 comprend par exemple une ou plusieurs régions logiques 40. Par région logique, on entend des régions dans lesquels sont formés les composants, par exemple les transistors, de circuits ou portes logiques. Par exemple, les transistors 12 et 14 du circuit 30 peuvent être formés dans la région 40. La région 40 comprend par exemple des caissons semiconducteurs, par exemple au moins des caissons d'un deuxième type de conductivité, par exemple de type N. La région 40 comprend de préférence au moins une région plus fortement dopée 42 reliée, de préférence connectée, au noeud 18.

Le dispositif 36 comprend un caisson 44. Le caisson 44 est en un matériau semiconducteur dopé d'un deuxième type de conductivité, opposé au premier type de conductivité. Le caisson 44 est par exemple dopé de type N. L'interface entre le caisson 44 et le substrat 38 forme la diode 32.

Le caisson 44 comprend par exemple une région 46 plus fortement dopée, du même type de conductivité que le caisson 44. La région 46 est reliée, de préférence connectée, à la sortie d'une source de tension aléatoire. Ainsi, la région 46 reçoit la tension aléatoire VRAND.

Le substrat 38 comprend par exemple une région 48 plus fortement dopée, du même type de conductivité que le substrat 38. La région 48 est reliée, de préférence connectée, à la région 42. La région 48 est par exemple reliée, de préférence connectée, à une source de la tension de référence.

La figure 4 représente schématiquement un mode de réalisation d'un dispositif protégé contre le balayage laser. Plus précisément, la figure 3 représente schématiquement un autre mode d'implémentation de la diode 32 de la figure 2.

La figure 4 représente un dispositif électronique 50. Le dispositif 50 est par exemple une puce électronique. Le dispositif 50 comprend un substrat semiconducteur 52 du premier type de conductivité. Le substrat 52 est par exemple un substrat dopé P.

Le dispositif 50 comprend par exemple une ou plusieurs régions logiques 54 identiques aux régions logiques 40 décrites en relation avec la figure 3. Les régions logiques comprennent par exemple des caissons semiconducteurs 56 identiques aux régions 42 décrits en relation avec la figure 3.

Le dispositif 50 comprend un caisson 58 situé dans le substrat 52. Le caisson 58 est en un matériau semiconducteur dopé du deuxième type de conductivité. Le caisson 58 est par exemple dopé de type N.

Le dispositif 50 comprend un autre caisson 60. Le caisson 60 est en un matériau semiconducteur dopé du premier type de conductivité, c'est-à-dire le type de conductivité du substrat 52. Le caisson 60 est par exemple dopé de type P. Le caisson 60 est situé dans le caisson 58.

L'interface entre le caisson 58 et le caisson 60 forme la diode 32.

Le caisson 58 comprend par exemple une région 62 plus fortement dopée, du même type de conductivité que le caisson 58. La région 62 est reliée, de préférence connectée, à la sortie d'une source de tension aléatoire. Ainsi, la région 62 reçoit la tension aléatoire VRAND.

Le caisson 60 comprend par exemple une région 64 plus fortement dopée, du même type de conductivité que le caisson 60. La région 64 est reliée, de préférence connectée, à la région 56. La région 64 est par exemple reliée, de préférence connectée, à une source de la tension de référence.

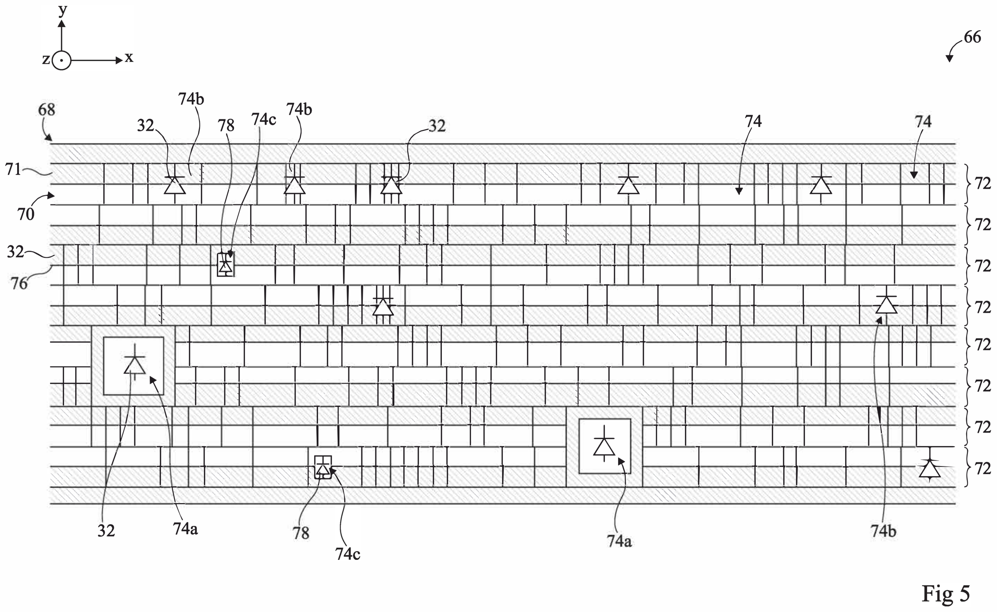

La figure 5 représente schématiquement et en vue de dessus un mode de réalisation d'un dispositif 66 protégé contre le balayage laser. Le dispositif 66 est par exemple une puce électronique. Le dispositif 66 comprend par exemple des circuits logiques. La figure 5 représente une partie du dispositif 66 comprenant des circuits logiques.

Le dispositif 66 comprend un substrat 68. Le substrat 68 est en un matériau semiconducteur. Le substrat 68 est dopé du premier type de conductivité, par exemple de type P.

Le dispositif 66 comprend en outre au moins un caisson 70, par exemple au moins deux caissons 70, par exemple au moins dix caissons. Les caissons 70 sont situés dans le substrat 68. Les caissons 70 sont en un matériau semiconducteur, par exemple le même matériau que le substrat 68. Les caissons sont dopés du deuxième type de conductivité, c'est-à-dire du type opposé au type de conductivité du substrat 68. Les caissons sont par exemple dopés de type N.

Les caissons 70 affleurant de préférence la surface du substrat 68. Les caissons 70 forment des lignes s'étendant selon un axe X. Les caissons 70 s'étendent de préférence dans des directions parallèles les unes aux autres. De préférence, chaque caisson 70 a une dimension selon un axe Y sensiblement constante.

Les caissons 70 sont séparés les uns des autres par des régions 71 du substrat 68. Les régions 71 du substrat 68 séparant les caissons 70 s'étendent de préférence sur toute la hauteur des caissons 70. Les régions 71 du substrat 68 situées entre les caissons 68 ont par exemple une dimension selon un axe Y sensiblement constante.

Le dispositif 66 comprend ainsi, au niveau de la surface du substrat, une alternance de caissons 70 et de régions 71 du substrat 68 selon l'axe Y.

Par exemple, des caissons 70 peuvent être situés sur une même ligne selon l'axe X. Lesdits caissons 70 sont alors alignés selon l'axe X. Lesdits caissons 70 d'une même ligne sont séparés les uns des autres par des régions 71 de substrat 68.

Le dispositif 66 comprend des lignes 72 de cellules 74. Les lignes s'étendent de préférence selon l'axe X. Les lignes 72 sont ainsi de préférence parallèles les unes aux autres. Chaque ligne 72 comprend de préférence au moins deux cellules 74, par exemple au moins dix cellules.

Chaque cellule 74 comprend une portion de caisson 70 et une portion de régions 71 du substrat 68. Ainsi, chaque cellule 74 comprend, au niveau de la surface du substrat 68, une portion du caisson 70 et une portion d'une région 71. Chaque cellule 74 comprend ainsi une interface P-N. Chaque cellule 74 comprend ainsi de préférence une interface P-N à la surface du substrat 68.

Chaque cellule 74 est par exemple entourée par un mur isolant 76.

De préférence, toutes les cellules 74 d'une même ligne 72 ont les mêmes dimensions selon l'axe Y. De préférence, toutes les cellules 74 d'une même ligne 72 ont les mêmes dimensions selon l'axe Y, à l'exception de cellules 74a. Chaque cellule 74a a une dimension selon l'axe Y sensiblement égale à la somme des dimensions selon l'axe Y des lignes dans lesquelles elle est située. Deux cellules 74a sont représentées en figure 5. Les deux cellules 74a de la figure 5 ont une dimension selon l'axe Y égale à la somme des dimensions de deux lignes 72. Ainsi, les cellules 74a de la figure 5 s'étendent sur deux lignes 72.

De préférence, chaque cellule 74 comprend au moins un composant électronique. Par composant électronique, on entend un élément, actif ou passif, destiné à être assemblé avec d'autres afin de réaliser une ou plusieurs fonctions électroniques. Par exemple, les composants peuvent être des transistors, des résistances, des diodes, des condensateurs, ou des inductances.

Le dispositif 66 comprend des cellules 74b comprenant des diodes 32, telles que décrites précédemment, permettant de protéger les circuits des attaques par balayage laser. De préférence, chaque cellule 74b comprend une unique diode 32. De préférence, chaque cellule 74b comprend uniquement une diode 32.

En outre, le dispositif 66 comprend par exemple des cellules 74c. Chaque cellule 74c comprend un composant électronique et une diode 32. Le composant est par exemple un transistor. La diode 32 est par exemple située dans un caisson 78 situé dans la cellule 74c.

Les cathodes de toutes les diodes 32 sont par exemple reliées, de préférence connectées, au noeud 18, non représenté, d'application de la tension de référence, par exemple la masse.

L'anode de chaque diode 32 est reliée, de préférence connectée, à une source d'une tension aléatoire. Le dispositif 66 comprend ainsi un générateur de tensions aléatoires. De préférence, le générateur de tensions aléatoires est configuré pour générer au moins deux tensions aléatoires distinctes. Les diodes 32 ne reçoivent de préférence pas toutes la même tension aléatoire. De préférence, les diodes 32 reçoivent une tension aléatoire parmi au moins deux tensions aléatoires générées par le générateur de tensions aléatoires.

Selon un mode de réalisation, l'anode de chaque diode 32 reçoit une tension aléatoire distincte des tensions aléatoires reçues par les autres diodes 32. Le générateur de tensions aléatoires est alors configuré pour générer au moins autant de tensions aléatoires qu'il y a de diode 32 and le dispositif 66.

Selon un autre mode de réalisation, au moins deux diodes 32 reçoivent la même tension aléatoire. De préférence, une même tension aléatoire n'est pas fournie à des diodes d'une même ligne. Ainsi, les diodes 32 d'une même ligne reçoivent de préférence toute des tensions aléatoires distinctes.

Les diodes 32 sont de préférence réparties dans le dispositif 66, de préférence réparties sur l'ensemble de la région comprenant les éléments logiques. De préférence, chaque ligne 72 comprend au moins une diode 32, par exemple au moins deux diodes 32. De préférence, la densité de diodes 32 dans les lignes 72 est d'au moins 5 diodes 32 par centaine de micromètres carrés, de préférence au moins 10 diodes 32 par centaine de micromètres carrés.

De préférence, le dispositif 66 ne comprend pas deux diodes 32 accolées. Autrement dit, chaque diode 32 est séparée des autres diodes 32 par au moins une cellule 72 ne comprenant pas de diode 32.

De préférence, le dispositif 66 comprend au moins deux types de diodes 32. Par exemple, le dispositif 66 comprend au moins une diode 32 telle que celle décrite en relation avec la figure 3 et au moins une diode telle que celle décrite en relation avec la figure 4.

Par exemple, le dispositif 66 comprend au moins deux diodes ayant des dimensions différentes. Par exemple, le dispositif 66 comprend au moins deux diodes dont les interfaces P-N, c'est-à-dire la surface de contact entre la cathode et l'anode, ont des dimensions différentes.

Par exemple, le dispositif 66 comprend au moins deux diodes 32 ayant des valeurs de dopages différentes.

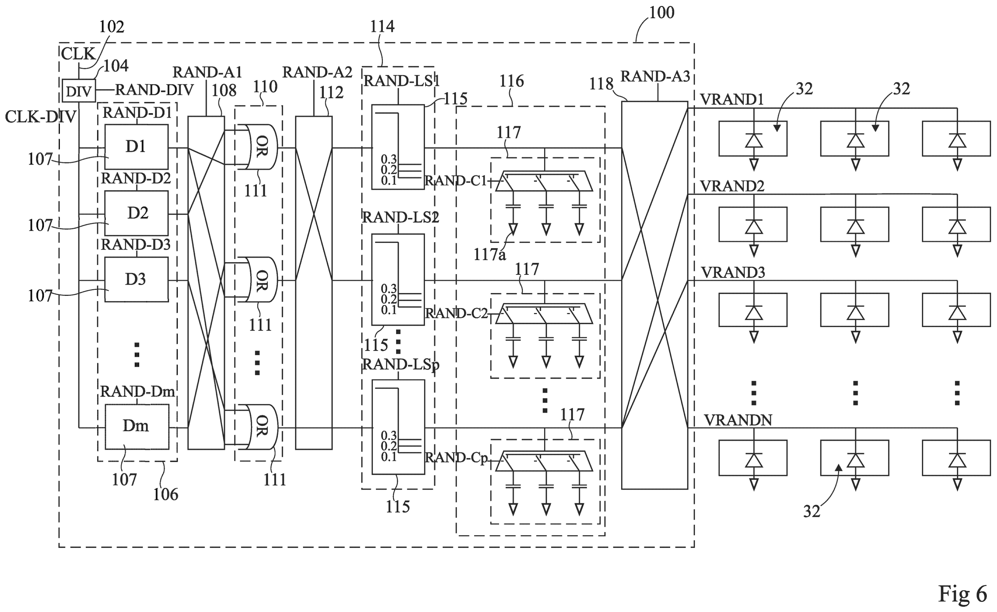

La figure 6 représente un mode de réalisation d'un générateur 100 de tensions aléatoires.

Le générateur 100 est par exemple configuré pour générer plusieurs tensions aléatoires. En figure 6, le générateur 100 est configuré pour générer N tensions aléatoires (VRAND1, VRAND2, VRAND3, ..., VRANDN), la valeur N étant supérieure à 3. Le générateur 100 comprend ainsi N sorties, des tensions aléatoires étant générées sur chaque sortie. Chaque sortie est reliée, de préférence connectée, à la cathode d'au moins une diode 32. Dans l'exemple de la figure 6, chaque sortie du générateur 100 est reliée, de préférence connectée, à la cathode de trois diodes 32.

Le générateur 100 comprend une première entrée 102. Le générateur est configuré pour recevoir, sur l'entrée 102, un signal d'horloge CLK, c'est-à-dire une tension oscillante périodique, par exemple un signal carré, ayant une période constante.

Le générateur 100 comprend au moins une deuxième entrée, non représentée. La deuxième entrée est configurée pour recevoir une valeur aléatoire. Chaque deuxième entrée est reliée, de préférence connectée, à une sortie d'un générateur de nombres aléatoires. Le générateur de nombres aléatoires est par exemple un générateur de nombres aléatoires physique. Le générateur de nombres aléatoires génère par exemple des nombres aléatoires pour le cryptage et/ou le décryptage de données. Les valeurs des nombres aléatoires fournis sur les sorties du générateur de nombres aléatoires sont variables. Ainsi, les valeurs des nombres aléatoires fournis sur les sorties du générateur de nombres aléatoires changent tous les cycles d'un signal d'horloge, par exemple tous les cycles du signal d'horloge CLK.

Le générateur 100 comprend au moins un module configuré pour modifier le signal d'horloge de manière à obtenir une tension aléatoire. Chaque module dépend d'au moins une valeur aléatoire reçue sur une deuxième entrée. Plusieurs types de modules sont représentés en figure 6, agencé dans un certain ordre. Le générateur peut avoir un nombre quelconque de modules agencés dans un ordre quelconque, certains types de modules pouvant être présents plusieurs fois. Le générateur peut comprendre d'autres types de modules permettant de modifier le signal d'horloge de manière à obtenir une tension aléatoire.

Dans l'exemple de la figure 6, le générateur 100 comprend un module 104 configuré pour diviser la fréquence du signal d'horloge par une valeur aléatoire. Le module 104 comprend une première entrée configurée pour recevoir le signal d'horloge CLK et une deuxième entrée configurée pour recevoir une valeur aléatoire RAND-DIV. La première entrée du module 104 est reliée, de préférence connectée, à la première entrée 102 du générateur 100. La deuxième entrée du module 104 est reliée, de préférence connectée, à une deuxième entrée du générateur 100. Le module 104 comprend une sortie sur laquelle est généré un signal CLK-DIV. Le signal CLK-DIV est égal au signal CLK dont la fréquence est divisée par la valeur aléatoire RAND-DIV.

Dans l'exemple de la figure 6, le générateur 100 comprend un module 106. Le module 106 est configuré pour ajouter des retards, de préférence distincts les uns des autres, de préférence différents les uns des autres, à chaque signal reçu en entrée. Dans l'exemple de la figure 6, le module 106 comprend m premières entrées configurées pour recevoir une tension. Dans l'exemple de la figure 6, lesdites m premières entrées sont reliées, de préférence connectées, à la sortie du module 104. Lesdites premières entrées reçoivent donc toutes la même tension CLK-DIV. Le nombre m a une valeur supérieure ou égale à 1, de préférence supérieure ou égale à 3. Le module 106 comprend en outre m deuxièmes entrées configurées pour recevoir chacune un nombre aléatoire (RAND-D1, RAND-D2, RAND-D3, RAND-Dm), de préférence distinct des autres nombres aléatoires reçus sur les autres deuxièmes entrées du module 106. Lesdites deuxièmes entrées sont reliées, de préférence connectées, à des sorties, de préférence des sorties différentes, du générateur de nombres aléatoires.

Dans l'exemple de la figure 6, le module 106 comprend m éléments 107 (D1, D2, D3, ..., Dm). Chaque élément 107 comprend une première entrée configurée pour recevoir une tension et une deuxième entrée configurée pour recevoir un nombre aléatoire. Chaque première entrée est reliée, de préférence connectée, à une première entrée du module 106 et est donc reliée, de préférence connectée, à la sortie du module 104.

Chaque module 107 est configuré pour ajouter un retard au signal reçu sur la première entrée de l'élément. Le retard ajouté par chaque élément 107 dépend de la valeur aléatoire reçue par l'élément 107.

Dans l'exemple de la figure 6, le générateur 100 comprend un module 108 d'aiguillage aléatoire. Le module 108 comprend m premières entrées, chaque entrée étant reliée, de préférence connectée, à la sortie d'un élément 107. Ainsi, la sortie de chaque élément 107 est reliée, de préférence connectée, à une première entrée du module 108. Le module 108 comprend une deuxième entrée, configurée pour recevoir une valeur aléatoire RAND-A1, générée par un générateur de valeurs aléatoires. La deuxième entrée du module 108 est par exemple reliée, de préférence connectée, à une sortie du générateur de nombre aléatoire.

Le module 108 comprend des sorties. Le module 108 comprend par exemple un nombre pair de sorties. Le module 108 comprend par exemple un nombre de sorties différent, par exemple supérieur, du nombre d'entrées. Chaque sortie du module 108 est reliée, de préférence connectée, à une première entrée du module 108. La première entrée à laquelle est reliée, de préférence connectée, chaque sortie dépend de la valeur aléatoire RAND-A1. Chaque sortie du module 108 peut être reliée, de préférence connectée, à l'une quelconque des premières entrées du module 108. Plusieurs sorties peuvent être reliées à une même première entrée. Certaines premières entrées peuvent ne pas être reliées, pour certaines valeurs aléatoires RAND-A1, à une sortie du module 108, de préférence pas pour toutes les valeurs possibles de la valeur RAND-A1. Lorsque la valeur aléatoire reçue sur la deuxième entrée est modifiée, les liaisons entre les premières entrées et les sorties sont modifiées de manière à dépendre de la nouvelle valeur RAND-A1.

Dans l'exemple de la figure 6, le générateur 100 comprend un module 110. Le module 110 est configuré pour appliquer la fonction OU (OR) aux tensions provenant des sorties du module précédent, c'est-à-dire le module 108. Le module 110 comprend des portes logiques OU 111. Le module 110 comprend par exemple au moins trois portes 111. Le module 110 comprend par exemple deux fois moins de portes 111 que le module 108 a de sorties. Chaque porte 111 comprend deux entrées reliées, de préférence connectées, à des sorties du module 108. De préférence, chaque sortie du module 108 est reliée, de préférence connectée, à une, de préférence une unique, entrée d'une porte 111.

Selon un autre mode de réalisation, les portes 111 peuvent être des portes logiques autres que des portes OU. Les portes 111 peuvent par exemple être des portes ET, NON ET ou des portes OU exclusif.

Dans l'exemple de la figure 6, le générateur 100 comprend un module 112 d'aiguillage aléatoire. Le module 112 comprend des premières entrées et une deuxième entrée. Le module 112 comprend par exemple autant de premières entrées que le module 110 comprend de portes 111. Chaque première entrée est par exemple reliée, de préférence connectée, à la sortie d'une porte 111. Chaque sortie d'une porte 111 est par exemple reliée, de préférence connectée, à une première entrée du module 112. La deuxième entrée du module 112 est configurée pour recevoir une valeur aléatoire RAND-A2, générée par un générateur de valeurs aléatoires. La deuxième entrée du module 112 est par exemple reliée, de préférence connectée, à une sortie du générateur de nombre aléatoire.

Le module 112 comprend des sorties. Le module 112 comprend par exemple un nombre de sorties différent, par exemple supérieur, du nombre d'entrées. Chaque sortie du module 112 est reliée, de préférence connectée, à une première entrée du module 112. La première entrée à laquelle est reliée, de préférence connectée, chaque sortie dépend de la valeur aléatoire RAND-A2. Chaque sortie du module 112 peut être reliée, de préférence connectée, à l'une quelconque des premières entrées du module 112. Plusieurs sorties peuvent être reliées à une même première entrée. Certaines premières entrées peuvent ne pas être reliées, pour certaines valeurs aléatoires RAND-A2, à une sortie du module 112, de préférence pas pour toutes les valeurs possibles de la valeur RAND-A2. Lorsque la valeur aléatoire reçue sur la deuxième entrée est modifiée, les liaisons entre les premières entrées et les sorties sont modifiées de manière à dépendre de la nouvelle valeur RAND-A2.

Le générateur 100 comprend un module 114 de conversion de tension ("level shifter") aléatoire. Le module 114 est configuré pour modifier l'amplitude de tension des signaux d'entrée selon une valeur aléatoire. Plus précisément, le module 114 comprend des éléments 115, chacun étant un circuit de conversion de tension configuré pour modifier l'amplitude d'une tension selon une valeur aléatoire. Le module 114 comprend p éléments 115, la valeur p étant de préférence supérieure ou égale à 3. Le module 114 comprend de préférence autant d'éléments 115 que le module 112 a de sorties. Chaque élément 115 a une première entrée, par exemple reliée, de préférence connectée, à une sortie du module 112, et une deuxième entrée configurée pour recevoir une valeur aléatoire (RAND-LS1, RAND-LS2, RAND-LS3, RAND-LSp). Chaque élément 115 est configuré pour ajouter à la tension reçue sur la première entrée une tension dont la valeur, positive ou négative, dépend de la valeur aléatoire reçue sur la deuxième entrée.

Dans l'exemple de la figure 6, le générateur 100 comprend un module 116. Le module 116 comprend des premières et deuxièmes entrées. Le module 116 comprend de préférence autant de premières entrées que le module 115 comprend d'élément 115. Chaque première entrée du module 116 est reliée, de préférence connectée, à une sortie du module 114, c'est-à-dire à une sortie d'un élément 115. Le module 116 comprend par exemple autant de deuxièmes entrées que de premières entrées. Les deuxièmes entrées sont configurées pour recevoir des nombres aléatoires (RAND-C1, RAND-C2, ..., RAND-Cp) distinctes. Ainsi, les premières entrées sont de préférence reliées, de préférence connectées, à des sorties du générateur de nombres aléatoires.

Le module 116 comprend des sorties. Le module 116 comprend de préférence autant de sorties que de premières entrées. Chaque sortie du module 116 est reliée, de préférence connectée, à une, de préférence une unique, première entrée du module 116. Chaque première entrée du module 116 est reliée, de préférence connectée, à une, de préférence une unique, sortie du module 116. Le module 116 comprend des éléments 117, par exemple autant d'éléments 117 que de sorties du module 116. Chaque sortie du module 116 est reliée, par un élément 117, à un noeud 117a de référence, par exemple la masse.

Chaque élément 117 reçoit un nombre aléatoire. Plus précisément, chaque élément 117 comprend une première entrée reliée, de préférence connectée, à une sortie du module 116 et une deuxième entrée reliée, de préférence connectée, à une deuxième entrée du module 116, et recevant ainsi un nombre aléatoire (RAND-C1, RAND-C2, ..., RAND-Cp). Les éléments 117 sont des éléments capacitifs. La capacité de chaque élément 117 dépend du nombre aléatoire reçu par ledit élément 117. Par exemple, chaque élément 117 comprend plusieurs branches comprenant un interrupteur et un condensateur reliés en série, la commande des interrupteurs dépendant du nombre aléatoire fourni à l'élément 117. Ainsi, le nombre aléatoire reçu en entrée d'un élément 117 détermine quels interrupteurs sont ouverts et quels interrupteurs sont fermés et détermine donc la valeur capacitive totale de l'élément 117.

Selon un exemple, les éléments 117 sont identiques les uns aux autres.

Selon un autre exemple, les éléments 117 sont différents les uns des autres. Le nombre de condensateurs et les capacités des condensateurs sont par exemple différents.

Dans l'exemple de la figure 6, le générateur 100 comprend un module 118 d'aiguillage aléatoire. Le module 118 comprend des premières entrées et une deuxième entrée. Le module 118 comprend par exemple autant de premières entrées que le module 116 comprend de sorties. Chaque première entrée est par exemple reliée, de préférence connectée, à une sortie du module 116. Chaque sortie du module 116 est par exemple reliée, de préférence connectée, à une première entrée du module 118. La deuxième entrée du module 118 est configurée pour recevoir une valeur aléatoire RAND-A3, générée par un générateur de valeurs aléatoires. La deuxième entrée du module 118 est par exemple reliée, de préférence connectée, à une sortie du générateur de nombre aléatoire.

Le module 118 comprend des sorties. Le module 118 comprend par exemple un nombre de sorties différent, par exemple supérieur, du nombre d'entrées. Le module 118 comprend de préférence N sorties. Chaque sortie du module 118 est reliée, de préférence connectée, à une première entrée du module 118. La première entrée à laquelle est reliée, de préférence connectée, chaque sortie dépend de la valeur aléatoire RAND-A3. Chaque sortie du module 118 peut être reliée, de préférence connectée, à l'une quelconque des premières entrées du module 112. Plusieurs sorties peuvent être reliées à une même première entrée. Certaines premières entrées peuvent ne pas être reliées, uniquement pour certaines valeurs aléatoires RAND-A3, à une sortie du module 112, de préférence pas pour toutes les valeurs possibles de la valeur RAND-A3. Lorsque la valeur aléatoire reçue sur la deuxième entrée est modifiée, les liaisons entre les premières entrées et les sorties sont modifiées de manière à dépendre de la nouvelle valeur RAND-A3.

Les sorties du module 118 sont reliées, de préférence connectées, aux sorties du générateur 100. Ainsi, les tensions VRAND1, VRAND2, VRAND3, ..., VRANDN sont générées sur les sorties du modules 118.

Toutes les valeurs aléatoires RAND-DIV, RAND-D1, RAND-D2, RAND-D3, ..., RAND-Dm, RAND-A1, RAND-A2, RAND-A3, RAND-LS1, RAND-LS2, ..., RAND-LSp, RAND-C1, RANd-C2, ..., RAND-Cp, sont de préférence distinctes. Ainsi, bien qu'à un instant donné, deux valeurs aléatoires peuvent être égales, elles peuvent de préférence avoir, à un autre instant, des valeurs différentes. Alternativement, les valeurs aléatoires de modules différents peuvent être égales entre elles. De préférence, les valeurs aléatoires d'un même module sont distinctes.

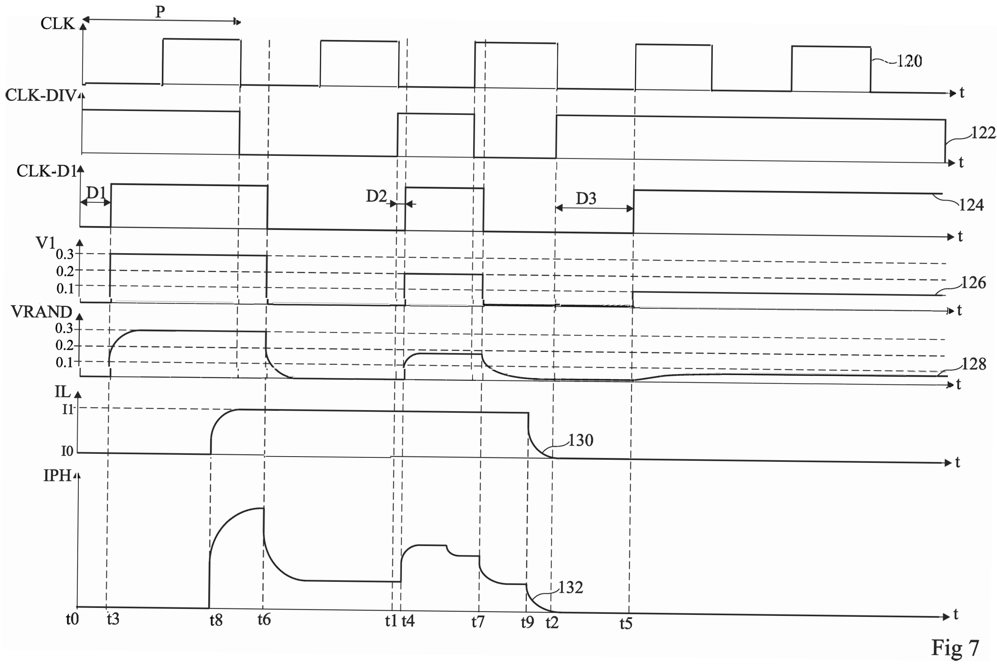

La figure 7 illustre le fonctionnement du générateur de la figure 6. Plus précisément, la figure 7 est un chronogramme comprenant :
- une courbe 120 illustrant les variations du signal d'horloge CLK ;
- une courbe 122 illustrant les variations du signal CLK-DIV résultant de l'application du signal CLK en entrée du module 104 ;
- une courbe 124 illustrant les variations du signal CLK-D1 résultant de l'application du signal CLK-DIV en entrée d'un élément 107 ;
- une courbe 126 illustrant les variations de la tension V1 résultant de l'application du signal illustré par la courbe 124 en entrée d'un élément 115 ;
- une courbe 128 illustrant les variations de la tension VRAND résultant de l'application du signal illustré par la courbe 126 en entrée d'un élément 117 ;
- une courbe 130 illustrant le courant IL généré par le rayon laser ; et
- une courbe 132 illustrant le courant Iph.

La courbe 120 illustre le signal d'horloge CLK. Le signal CLK est un signal carré périodique ayant une période P constante.

La courbe 122 illustre le signal CLK-DIV correspondant au signal CLK après une division de sa fréquence dépendant d'un nombre aléatoire variable. Ainsi, entre les instants t0 et t1, le signal CLK-DIV a une fréquence égale à la moitié de la fréquence du signal CLK. Entre les instants t1 et t2, le signal CLK-DIV a une fréquence égale à la fréquence du signal CLK divisée par un. Après l'instant t2, le signal CLK-DIV a une fréquence égale à la fréquence du signal CLK divisée par cinq.

La courbe 124 illustre le signal résultant de l'application du signal CLK-DIV en entrée d'un élément 107, c'est-à-dire un élément entrainant un retard aléatoire. Ainsi, le front montant du signal CLK-DIV situé à l'instant t0 est retardé d'un retard D1 déterminé par le nombre aléatoire reçu par l'élément 107, et est ainsi placé à un instant t3. Le front montant du signal CLK-DIV situé à l'instant t1 est retardé d'un retard D2, inférieur au retard D1, le nombre aléatoire ayant changé, et est ainsi placé à un instant t4. Le front montant du signal CLK-DIV situé à l'instant t2 est retardé d'un retard D3, supérieur au retard D2, le nombre aléatoire ayant changé, et est ainsi placé à un instant t5.

La courbe 126 illustre les variations du signal V1 résultant de l'application du signal CLK-D1 en entrée d'un élément 115 de conversion de tension. Ainsi, la tension V1 prend, au front montant de l'instant t3, une première valeur dépendant du nombre aléatoire reçu par l'élément 115, par exemple égale à 0.3 V. La tension V1 prend, au front montant de l'instant t4, une deuxième valeur différente de la première valeur, le nombre aléatoire ayant changé, par exemple égale à 0.2 V. La tension V1 prend, au front montant de l'instant t5, une troisième valeur différente de la deuxième valeur, le nombre aléatoire ayant changé, par exemple égale à 0.1 V.

La courbe 128 illustre les variations de la tension VRAND résultant de l'application de la tension V1 en entrée d'un élément 117 capacitif. Aux instants t3, t4 et t5, les condensateurs de l'élément 117 se chargent. La tension VRAND augmente donc de manière progressive de manière à atteindre la valeur de la tension V1. Similairement, à des instants t6 et t7, correspondant aux fronts descendants de la tension V1, les condensateurs de l'élément 117 se déchargent. La tension VRAND diminue donc de manière progressive de manière à atteindre la valeur de la tension V1. Les durées de charge et de décharge dépendent des valeurs du nombre aléatoire reçu par l'élément 117 et sont donc différentes les unes des autres.

A un instant t8, un rayon laser est appliqué aux environs d'une porte logique protégée contre le balayage laser, telle que décrit en relation avec la figure 2. Le rayon laser est retiré à un instant t9. Ainsi, avant l'instant t8, le courant IL est égal à une valeur basse I0, par exemple une valeur nulle. A l'instant t8, le courant IL augmente progressivement de manière à atteindre une valeur haute I1. La valeur haute dépend de l'état de la porte logique. A l'instant t9, le courant IL diminue progressivement de manière à atteindre la valeur basse I0.

Le courant Iph correspond au courant traversant la diode 32 lorsque la tension VRAND est appliquée à la cathode de la diode 32. Le courant Iph a, avant l'instant t8, une valeur basse, par exemple une valeur nulle. A partir de l'instant t8, la valeur du courant Iph augmente et diminue de manière déterminée par les variations de la tension VRAND, et donc déterminée par les valeurs aléatoires du générateur 100.

Le courant IGND, c'est-à-dire le courant mesuré lors d'une attaque par balayage laser, est la somme des courants IL et Iph. Ainsi, les variations causées par le courant Iph rendent difficile de déterminer la valeur haute dépendant de l'état de la porte logique. Il est donc difficile de déterminer l'état des portes logiques.

Un avantage des modes de réalisation décrits est qu'il est plus difficile pour un individu de déterminer les valeurs contenues dans les circuits logiques en effectuant un balayage laser.

Un autre avantage des modes de réalisation décrits est que des courants Iph différents sont générés sur les différentes diodes 32 associées aux différentes portes logiques. Ainsi, il n'est pas possible d'utiliser les valeurs obtenues sur différentes portes logiques pour déterminer les valeurs de courants correspondants aux différents états logiques.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (30, 66) comprenant :
une porte logique (31) relié à un premier noeud (18) d'application d'une tension de référence ;
un générateur de tension aléatoire (100), configuré pour générer une tension aléatoire (VRAND, VRAND1, VRAND2, VRAND3, VRANDN) sur un deuxième noeud (34) ;
une première diode (32), la cathode de la première diode (32) étant reliée au premier noeud (18) et l'anode de la première diode (32) étant reliée au deuxième noeud (34).

2. Procédé d'utilisation d'un dispositif électronique comprenant :
une porte logique (31) relié à un premier noeud (18) d'application d'une tension de référence ;
un générateur de tension aléatoire (100) ;
une première diode (32), la cathode de la première diode (32) étant reliée au premier noeud (18) et l'anode de la première diode (32) étant reliée au deuxième noeud (34), dans lequel une tension aléatoire (VRAND, VRAND1, VRAND2, VRAND3, VRANDN) est générée sur un deuxième noeud (34).

3. Dispositif selon la revendication 1 ou procédé selon la revendication 2, dans lequel la porte logique (31) est un circuit compris parmi : l'inverseur, le et logique, la négation du et logique, le ou inclusif, la négation du ou inclusif, le ou exclusif, la négation du ou exclusif.

4. Dispositif selon la revendication 1 ou 3 ou procédé selon la revendication 2 ou 3, dans lequel le dispositif comprend une première région comprenant une pluralité de portes logiques (31) et une pluralité de premières diodes (32).

5. Dispositif ou procédé selon la revendication 4, dans lequel la densité de premières diodes (32) est supérieure à 5 par mm² dans la première région.

6. Dispositif ou procédé selon la revendication 4 ou 5, dans lequel au moins deux premières diodes (32) ont des dimensions différentes.

7. Dispositif ou procédé selon l'une quelconque des revendications 4 à 6, dans lequel au moins deux premières diodes (32) ont des structures différentes.

8. Dispositif ou procédé selon l'une quelconque des revendications 4 à 7, dans lequel au moins une première diode (32) comprend une jonction PN formée entre un caisson (44) d'un premier type de conductivité et le substrat (38) du dispositif d'un deuxième type de conductivité, opposé au premier type de conductivité.

9. Dispositif ou procédé selon l'une quelconque des revendications 4 à 8, dans lequel au moins une première diode (32) comprend une jonction PN formée entre un premier caisson (60) d'un premier type de conductivité et un deuxième caisson (64) d'un deuxième type de conductivité, opposé au premier type de conductivité, le deuxième caisson (64) étant situé dans le premier caisson.

10. Dispositif selon l'une quelconque des revendications 1, 3 à 9 ou procédé selon l'une quelconque des revendications 2 à 9, dans lequel le générateur de tension aléatoire (100) est configuré pour générer au moins deux tensions aléatoires distinctes, chacune des tensions aléatoires étant appliqué à l'anode d'au moins une première diode (32).

11. Dispositif ou procédé selon la revendication 10, dans lequel le générateur de tension aléatoire comprend :
une entrée (102) reliée à un noeud d'application d'un signal d'horloge (CLK) ;
au moins un module (104, 106, 108, 110, 112, 114, 116, 118) configuré pour recevoir en entrée un nombre aléatoire et pour modifier le signal d'horloge en fonction du nombre aléatoire.

12. Dispositif ou procédé selon la revendication 10 ou 11, dans lequel le générateur (100) comprend un module (114) configuré pour modifier l'amplitude du signal d'horloge en fonction d'un nombre aléatoire.

13. Dispositif ou procédé selon l'une quelconque des revendications 10 à 12, dans lequel le générateur (100) comprend un module (104) configuré pour diviser la fréquence du signal d'horloge.

14. Dispositif ou procédé selon l'une quelconque des revendications 10 à 13, dans lequel le générateur (100) de tension aléatoire comprend au moins un module (108, 112, 118) d'aiguillage aléatoire.

15. Dispositif ou procédé selon l'une quelconque des revendications 10 à 14, dans lequel le générateur comprend un module (106) configuré pour ajouter un retard au signal d'horloge.
